(19)

Europäisches
Patentamt
European
Patent Office
Office européen
des brevets

(11)  **EP 4 653 908 A1**

(12)  **EUROPEAN PATENT APPLICATION**

(43) Date of publication:
   **26.11.2025  Bulletin 2025/48**

(21) Application number: **25175040.2**

(22) Date of filing: **08.05.2025**

(51) International Patent Classification (IPC):
   **G01S 7/35** (2006.01)      **G01S 13/00** (2006.01)
   **G01S 13/42** (2006.01)     **G01S 13/87** (2006.01)
   **G01S 13/931** (2020.01)

(52) Cooperative Patent Classification (CPC):
   **G01S 13/931; G01S 7/354; G01S 7/356;**
   **G01S 13/003; G01S 13/42; G01S 13/878**

(84) Designated Contracting States:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Designated Extension States:
   **BA**
   Designated Validation States:
   **GE KH LA MA MD TN**

(30) Priority:  **21.05.2024  US 202463650189 P**
           **01.11.2024  US 202418934882**

(71) Applicant: **Aptiv Technologies AG**
   **8200 Schaffhausen (CH)**

(72) Inventors:
   • **ZHANG, Yu**
     **Thousand Oaks (US)**
   • **LI, Zhengzheng**
     **Agoura Hills (US)**
   • **KOEPKE, Sean**
     **West Hills (US)**

(74) Representative: **Lewis Silkin LLP**
   **Arbor**
   **255 Blackfriars Road**
   **London SE1 9AX (GB)**

(54)  **JOINT DOPPLER AND ANGLE ESTIMATION FOR MIMO RADAR SYSTEMS**

(57)      A method for processing a radar signal includes receiving a set of signal segments via a set of antenna receiver channels, dividing the radar signal into a set of sub-spectrums, forming a first matrix, and determining whether an energy level associated with the first matrix has met a threshold energy level. The method includes generating a reconstructed signal. Generating the reconstructed signal includes determining a direction of arrival phase, generating a first set of measurements, determining an index value, determining a Doppler phase based on the index value, determining a second set of measurements based on the index value, and determining a direction of departure phase associated with the target object. The method includes subtracting data associated with the reconstructed signal from the first matrix, outputting the direction of departure phase, the direction of arrival phase, and the Doppler phase; and tracking a location of the target object.

Radar System

112    108

Radar System 108

Antenna Array 136

Transceiver 140

Processor Hardware 144

Memory Hardware 148

Radar Software
152

**FIG. 1**

**Description**

CROSS-REFERENCE TO RELATED APPLICATIONS

This application claims the benefit of U.S. Provisional Application No. 63/650,189 filed May 21, 2024.

FIELD

The present disclosure relates to frequency-domain signal processing and more particularly to estimation of characteristics such as frequency or angle from incoming radar signals (USPC Class 342).

BACKGROUND

Phase estimation is useful in a variety of technical applications, such as frequency estimation and angle estimation. For example, a radar system transmits signals and detects the signals as they rebound off objects. Frequency estimation can be used to determine the distance (and in some implementations, the velocity) of an object from the radar system (specifically, the distance from the radar system sensor array). Based on the frequency estimation, the differences between the detected and transmitted signal are determined and used to calculate the distance to the object and the object's velocity.

In various implementations, angle estimation may be used to determine the angular location of an object with respect to the radar system. Angle estimation relies on spatial differences between two more elements in the radar sensor array. By measuring the difference in arrival time of a detected signal at the sensor elements, the direction of arrival of the radar signal can be calculated.

In comparison to other types of sensors, such as cameras, radars provide improved performance in difficult environmental conditions, such as low lighting, fog, and/or with moving or overlapping objects. Accordingly, radars provide many advantages for driver assistance applications and/or autonomous driving applications, among others.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

SUMMARY

A method for processing a radar signal that includes a set of signal segments. The method includes receiving the set of signal segments via a set of antenna receiver channels. The method includes dividing the radar signal into a set of sub-spectrums. The method includes forming a first matrix based on data from the set of antenna receiver channels and data from the set of sub-spectrums. The method includes determining whether an energy level associated with the first matrix has met a threshold energy level. The method includes, in response to a determination that the energy level of the first matrix has met the threshold energy level, generating a reconstructed signal. Generating the reconstructed signal includes determining a direction of arrival phase. Determining the direction of arrival phase includes performing angular phase estimation on a set of sub-matrices of the first matrix. Generating the reconstructed signal includes generating a first set of measurements. Generating the first set of measurements includes beamforming the set of antenna receiver channels to the direction of arrival phase. Generating the reconstructed signal includes, based on the first set of measurements, determining an index value associated with a sub-spectrum of the set of sub-spectrums associated with a target object. Generating the reconstructed signal includes determining a Doppler phase based on the index value. Generating the reconstructed signal includes determining a second set of measurements based on the index value. Generating the reconstructed signal includes, based on the second set of measurements, determining a direction of departure phase associated with the target object. The method includes subtracting data associated with the reconstructed signal from the first matrix. The method includes outputting the direction of departure phase, the direction of arrival phase, and the Doppler phase. The method includes tracking a location of the target object with respect to a vehicle associated with the set of antenna receiver channels based on the direction of departure phase, the direction of arrival phase, and the Doppler phase.

In other features, the set of signal segments includes a plurality of signal segments. In other features, the set of antenna receiver channels includes a plurality of antenna receiver channels. In other features, the plurality of signal segments corresponds one-to-one with the plurality of antenna receiver channels. In other features, the set of sub-spectrums is a set of non-overlapping frequency ranges. In other features, the set of sub-spectrums is a set of equal-width frequency ranges.

In other features, the method includes transforming the radar signal into a second spectrum and determining an average of the second spectrum. In other features, the method includes determining an average magnitude of the radar signal in each sub-spectrum of the set of sub-spectrums. In other features, the method includes determining whether the radar signal indicates that the target object is present in the set of sub-spectrums. In other features, the method includes determining a Doppler phase of the radar signal associated with the target object.

In other features, transforming the radar signal into the second spectrum includes performing a fast Fourier transform (FFT) on a respective signal segment of the set of signal segments received by each antenna receiver channel of the set of antenna receiver channels. In other features, the method includes autonomously controlling a vehicle to avoid a collision with the target object. In other features, each sub-matrix of the set of sub-matrices is a row of the first matrix.

In other features, the method includes, after the subtracting the reconstructed signal from the first matrix, determining whether the energy level associated with the first matrix has met a threshold energy level. In other features, the method includes, in response to a determination that the energy level of the first matrix has met the threshold energy level, generating a second reconstructed signal. Generating the reconstructed signal includes determining a second direction of arrival phase. Determining of arrival phase includes performing angular phase estimation on a second set of sub-matrices of the first matrix. Generating the reconstructed signal includes generating a third set of measurements. Generating the third set of measurements includes beamforming the set of antenna receiver channels to the second direction of arrival phase and based on the third set of measurements, determining a second index value associated with a second sub-spectrum of the set of sub-spectrums associated with a second target object. In other features, generating the reconstructed signal includes determining a second Doppler phase based on the second index value. In other features, generating the reconstructed signal includes determining a fourth set of measurements based on the second index value. In other features, generating the reconstructed signal includes, based on the fourth set of measurements, determining a second direction of departure phase associated with the second target object. In other features, the method includes subtracting the second reconstructed signal from the first matrix.

A non-transitory computer-readable medium stores processor-executable instructions. The instructions include receiving a radar signal that includes a set of signal segments via a set of antenna receiver channels. The instructions include dividing the radar signal into a set of sub-spectrums. The instructions include forming a first matrix based on data from the set of antenna receiver channels and data from the set of sub-spectrums. The instructions include determining whether an energy level associated with the first matrix has met a threshold energy level. The instructions include, in response to a determination that the energy level of the first matrix has met the threshold energy level, generating a reconstructed signal. Generating the reconstructed signal includes determining a direction of arrival phase. Determining the direction of arrival phase includes performing angular phase estimation on a set of sub-matrices of the first matrix. Generating the reconstructed signal includes generating a first set of measurements. Generating the first set of measurements includes beamforming the set of antenna receiver channels to the direction of arrival phase. Generating the reconstructed signal includes, based on the first set of measurements, determining an index value associated with a sub-spectrum of the set of sub-spectrums associated with a target object. Generating the reconstructed signal includes determining a Doppler phase based on the index value. Generating the reconstructed signal includes determining a second set of measurements based on the index value. Generating the reconstructed signal includes, based on the second set of measurements, determining a direction of departure phase associated with the target object. The instructions include subtracting data associated with the reconstructed signal from the first matrix. The instructions include outputting the direction of departure phase, the direction of arrival phase, and the Doppler phase. The instructions include tracking a location of the target object with respect to a vehicle associated with the set of antenna receiver channels based on the direction of departure phase, the direction of arrival phase, and the Doppler phase.

In other features, the set of signal segments includes a plurality of signal segments. In other features, the set of antenna receiver channels includes a plurality of antenna receiver channels. In other features, the plurality of signal segments corresponds one-to-one with the plurality of antenna receiver channels. In other features, the set of sub-spectrums is a set of non-overlapping frequency ranges. In other features, the set of sub-spectrums is a set of equal-width frequency ranges.

In other features, the instructions include transforming the radar signal into a second spectrum and determining an average of the second spectrum. In other features, the instructions include determining an average magnitude of the radar signal in each sub-spectrum of the set of sub-spectrums. In other features, the instructions include determining whether the radar signal indicates that the target object is present in the set of sub-spectrums. In other features, the instructions include determining a Doppler phase of the radar signal associated with the target object.

In other features, transforming the radar signal into the second spectrum includes performing a fast Fourier transform (FFT) on a respective signal segment of the set of signal segments received by each antenna receiver channel of the set of antenna receiver channels. In other features, the instructions include autonomously controlling a vehicle to avoid a collision with the target object. In other features, each sub-matrix of the set of sub-matrices is a row of the first matrix.

In other features, the instructions include, after the subtracting the reconstructed signal from the first matrix, determining whether the energy level associated with the first matrix has met a threshold energy level. In other features, the instructions include, in response to a determination that the energy level of the first matrix has met the threshold energy level, generating a second reconstructed signal. Generating the reconstructed signal includes determining a second direction of arrival phase. Determining of arrival phase includes performing angular phase estimation on a second set of sub-matrices of the first matrix. Generating the reconstructed signal includes generating a third set of measurements. Generating the third set of measurements includes beamforming the set of antenna receiver channels to the second direction of arrival phase and based on the third set of measurements, determining a second index value associated with a second sub-spectrum of the set of sub-spectrums associated with a second target object. In other features, generating the reconstructed signal includes determining a second Doppler phase based on the second index value. In other features, generating the reconstructed signal includes determining a fourth set of measurements based on the second index value. In other features, generating the reconstructed signal includes, based on the fourth set of measurements, determining a second direction of departure phase associated with the second target object. In other features, the instructions include subtracting the second reconstructed signal from the first matrix.

A system for processing a radar signal that includes a set of signal segments includes memory hardware configured to store instructions and processor hardware configured to execute instructions stored by the memory hardware. The instructions include receiving a radar signal that includes a set of signal segments via a set of antenna receiver channels. The instructions include dividing the radar signal into a set of sub-spectrums. The instructions include forming a first matrix based on data from the set of antenna receiver channels and data from the set of sub-spectrums. The instructions include determining whether an energy level associated with the first matrix has met a threshold energy level. The instructions include, in response to a determination that the energy level of the first matrix has met the threshold energy level, generating a reconstructed signal. Generating the reconstructed signal includes determining a direction of arrival phase. Determining the direction of arrival phase includes performing angular phase estimation on a set of sub-matrices of the first matrix. Generating the reconstructed signal includes generating a first set of measurements. Generating the first set of measurements includes beamforming the set of antenna receiver channels to the direction of arrival phase. Generating the reconstructed signal includes, based on the first set of measurements, determining an index value associated with a sub-spectrum of the set of sub-spectrums associated with a target object. Generating the reconstructed signal includes determining a Doppler phase based on the index value. Generating the reconstructed signal includes determining a second set of measurements based on the index value. Generating the reconstructed signal includes, based on the second set of measurements, determining a direction of departure phase associated with the target object. The instructions include subtracting data associated with the reconstructed signal from the first matrix. The instructions include outputting the direction of departure phase, the direction of arrival phase, and the Doppler phase. The instructions include tracking a location of the target object with respect to a vehicle associated with the set of antenna receiver channels based on the direction of departure phase, the direction of arrival phase, and the Doppler phase.

Further areas of applicability of the present disclosure will become apparent from the detailed description, the claims, and the drawings. The detailed description and specific examples are intended for purposes of illustration only and are not intended to limit the scope of the disclosure.

BRIEF DESCRIPTION OF THE DRAWINGS

The present disclosure will become more fully understood from the detailed description and the accompanying drawings.

FIG. 1 is a functional block diagram of an example radar system.

FIG. 2 is an example of a frequency-modulated continuous waveform (FMCW).

FIG. 3 is an example of a phase-modulated FMCW in the Doppler spectrum.

FIGS. 4A-4B are an example of partial symmetrical Doppler division multiple access (DDMA).

FIG. 5 is an example of two overlapping target signals in the Doppler spectrum.

FIG. 6 is an example of two overlapping target signals in the Doppler spectrum.

FIG. 7 is an example of dividing the Doppler spectrum into sectors.

FIG. 8 is an example of formulating the complex amplitude from the Doppler spectrum into a 2-D matrix.

FIG. 9 is an example of the angle spectrum for receiver measurements from each Doppler sector and non-congruent integration angle spectrum on the direction of arrival dimension.

FIG. 10 is an example of the angle spectrum for receiver measurements after the first target has been subtracted.

FIG. 11 is an example of the angle spectrum for receiver measurements after the first target and second target have been subtracted.

FIG. 12 is a flowchart of an example method for initiating joint Doppler and angle estimation.

FIGS. 13A-13B are a flowchart of an example method for joint Doppler and angle estimation.

In the drawings, reference numbers may be reused to identify similar and/or identical elements.

DETAILED DESCRIPTION

INTRODUCTION

The present disclosure provides a method for separating overlapping radar signal data from multiple targets (for example, objects that reflect the radar signal back to the receiver antenna). Mixed-target signals can result in missing Doppler targets, incorrect Doppler frequency estimation, and/or incorrect angle estimation. In some implementations, the disclosed method runs continuously while a radar system is transmitting and receiving so that all radar signals are processed via the disclosed method.

The disclosed method describes using partial symmetrical Doppler division multiple access (DDMA) to jointly estimate a target's Doppler phase and angle. While the disclosure describes the Doppler phase domain, the same approach can be applied to a normalized Doppler frequency domain (assuming the modulation is applied on the transmission channels). Similarly, while the disclosure describes using DDMA phase modulation on transmission (TX) channels, DDMA phase modulation can also be applied to receiving (RX) channels (in such a case, all the processing on TX channels and RX channels would switch to RX channels and TX channels respectively).

The present disclosure describes Doppler estimation and angle estimation. For angle estimation, the angle finding methodology can also jointly estimate the direction of departure (DOD) angular phase and direction of arrival (DOA) angular phase of a target. For a target from a bistatic multipath, the DOD angular phase and DOA angular phase will lead to the DOD angle and DOA angle respectively. For a target from a direct path, the DOD angular phase and DOA angular phase will lead to the same angle. The angles are used to form the virtual array (or synthetic array) from the MIMO (multiple-input multiple-output) radar array and determine angle finding with the virtual array to achieve better angle resolution and accuracy.

While a uniform linear array (ULA) is described as an example, the methodology of the present disclosure is applicable to both ULA and sparse arrays. Additionally, the TX array and RX array can be both in the azimuth dimension or both in the elevation dimension, or one in the azimuth and another in elevation dimension respectively. The TX array and RX array can also be 2-D arrays.

**EXAMPLE RADAR SYSTEM**

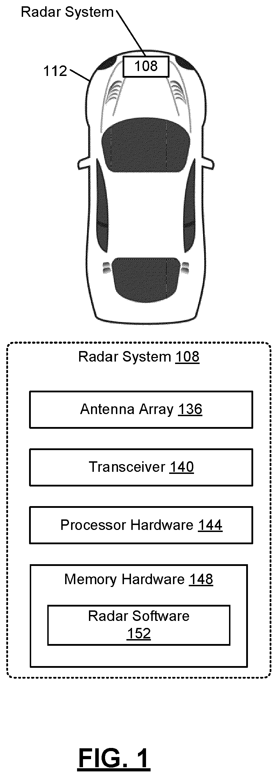

FIG. 1 is a high-level block diagram of radar system 108. Radar system 108 may be mounted to and/or integrated within vehicle 112. Radar system 108 is configured to detect one or more objects that are proximate to vehicle 112. In various implementations, radar system 108 may be a forward-looking radar system.

In various implementations, radar system 108 may be mounted to a top, underside, front side, rear side, left side, or right side of vehicle 112. In various implementations, radar system 108 includes multiple radar subsystems. For example, radar system 108 may include a first front-mounted radar subsystem positioned proximate a left side of vehicle 112 and a second front-mounted radar subsystem positioned proximate a right side of vehicle 112. In various implementations, location(s) of radar system 108 may be selected to provide a particular field of view that encompasses a region of interest in which one or more objects may be present. For example, a field of view may include a 360-degree field of view, one or more 180-degree fields of view, and/or one or more 90-degree fields of view.

In various implementations, vehicle 112 may include one or more systems that use data provided by radar system 108. For example, vehicle 112 may include a driver assistance system and/or an autonomous driving system. The driver assistance system may use data provided by radar system 108 to monitor one or more blind spots of vehicle 112 and/or alert a driver of vehicle 112 of a potential collision with an object. The autonomous driving system may use the data provided by radar system 108 to drive vehicle 112, avoid collisions with objects, perform emergency braking, change lanes, and/or adjust a speed of vehicle 112, among others.

In various implementations, radar system 108 may include at least one antenna array 136 and at least one transceiver 140. In various implementations, radar system 108 may include processor hardware 144 and memory hardware 148. The memory hardware 148 may include radar software 152. In various implementations, radar software 152 may be configured to analyze radar signals, detect one or more objects, and/or determine one or more characteristics (such as position and/or velocity) of the objects. In various implementations, radar software is fully or partially implemented in hardware.

## SLOW-TIME FREQUENCY DIVISION MULTIPLEXING

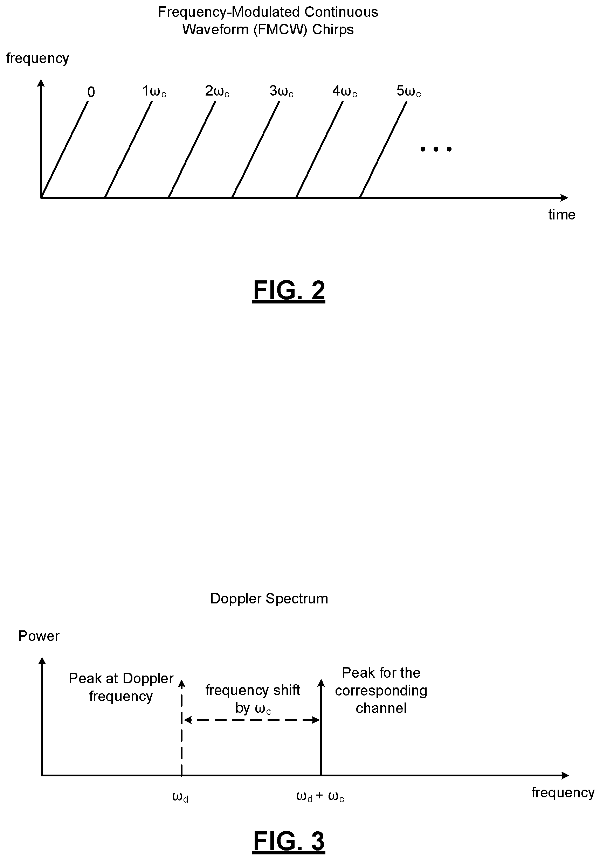

MIMO radar waveforms with equal-spacing and empty sectors in slow-time frequency division multiplexing (ST-FDM) use polyphase phase shifters to support multiple channels (such as transmission and/or receiving) without Doppler ambiguity. While the present disclosure assumes the modulation is applied to the transmitter (TX) channels, the method and modulation can be applied to receiving (RX) channels as well. FIG. 2 is an example of a frequency-modulated continuous waveform (FMCW) frequently used in radar applications. As shown in FIG. 3, if a progressive phase modulation $(p - 1)\omega_c$ is added to the pth transmit pulse of a FMCW, the received Doppler frequency will shift by $\omega_c$ in the slow-time Doppler spectrum.

In a MIMO radar system there are $N$ TX channels and $M$ RX channels. The slow time Doppler frequency is divided into $L$ equal sectors, where $L > N$ (greater than the number of TX channels). In some implementations, $L$ is a power of two (because the Doppler spectrum is typically generated by an FFT which results in a length that is also a power of two). In some implementations, $L$ is the smallest or second smallest power of two that is greater than the number of TX channels.

The unit modulation frequency is $\omega_c^{(0)} = 1/L$ and the corresponding phase coding is $\phi_c^{(0)} = 2\pi/L$. The frequency modulation for the nth channel is $\omega_c^{(n)} = c_N \omega_c^{(0)}$, where $c_N$ is an integer. Then for the $N$ TX channels, the $N$ frequency modulation value set is:

$$\left\{ \omega_c^{(1)}, \omega_c^{(2)}, ..., \omega_c^{(N)} \right\} = \left\{ c_1 \omega_c^{(0)}, c_2 \omega_c^{(0)}, ..., c_N \omega_c^{(0)} \right\},$$

where $\{c_1, c_2, ..., c_N\} \subset \{0, 1, 2, 3, ..., L - 1\}$ and $c_i \neq c_j$, $i = 1, 2, ..., N$, and $j = 1, 2, ..., N$.

The phase modulation for the nth channel is $\phi_c^{(n)} = c_N \phi_c^{(0)}$, where $c_N$ is an integer. Then for the $N$ TX channels, the $N$ phase modulation value set is

$$\left\{ \phi_c^{(1)}, \phi_c^{(2)}, ..., \phi_c^{(N)} \right\} = \left\{ c_1 \phi_c^{(0)}, c_2 \phi_c^{(0)}, ..., c_N \phi_c^{(0)} \right\}$$

where $\{c_1, c_2, ..., c_N\} \subset \{0, 1, 2, 3, ..., L - 1\}$ and $c_i \neq c_j$, $i = 1, 2, ..., N$, $j = 1, 2, ..., N$.

After applying the fast Fourier transform (FFT) to the modulated signal in Doppler frequency domain, the channels are placed in $N$ separated sectors with one TX channel per sector and $L - N$ empty sectors (in other words, sectors without signal). Assuming the target's Doppler frequency is $\omega_d$ in the normalized frequency domain, the location of the nth channel is:

$$\omega_n = \omega_d + \omega_c^{(n)} = \omega_d + c_n \omega_c^{(0)} = \omega_d + \frac{c_n}{L}.$$

For the $n$th channel, if $\omega_d + \frac{c_n}{L} > 1$, its location in the normalized frequency domain will be circularly shifted within interval [0 1] to:

$$\omega_n = \omega_d + \frac{c_n}{L} - k \subseteq \begin{bmatrix} 0 & 1 \end{bmatrix},$$

where k is a positive integer.

Correspondingly, in the phase domain, assuming the Doppler phase of the target is $\phi_d$, the location of the nth channel is:

$$\phi_n = \phi_d + \phi_c^{(n)} = \phi_d + c_n\phi_c^{(0)} = \phi_d + c_n\frac{2\pi}{L}.$$

For the nth channel, if $\phi_d + c_n\frac{2\pi}{L} > 2\pi$ , its location in the phase domain will be circularly shifted within interval [0 $2\pi$] to:

$$\phi_n = \phi_d + c_n\frac{2\pi}{L} - 2k\pi \subseteq [0 \quad 2\pi],$$

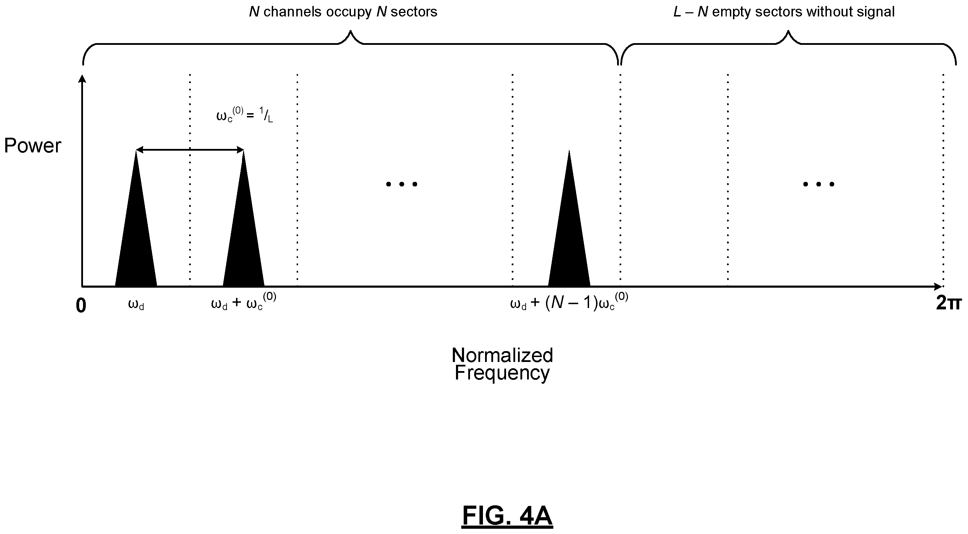

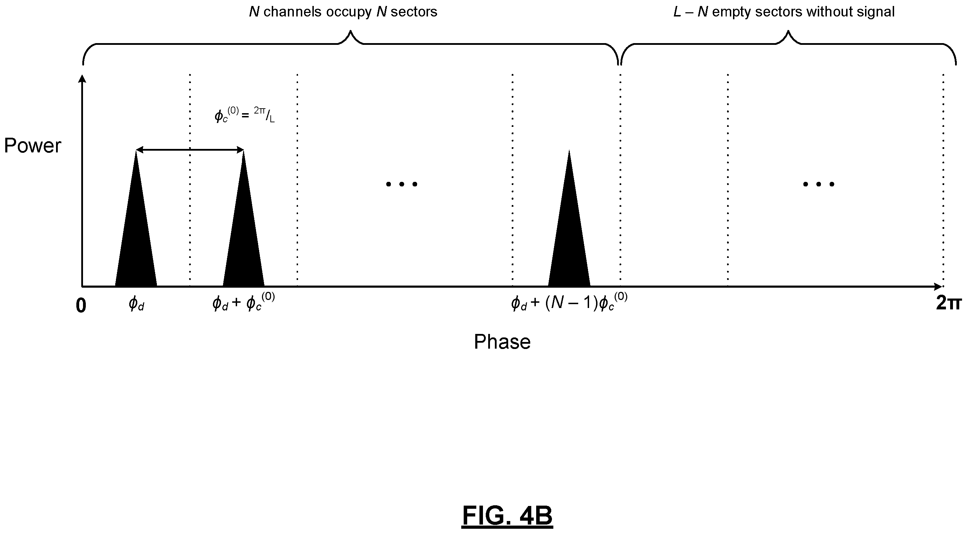

where k is an integer. FIGS. 4A-4B are an example Doppler spectrum in the frequency and phase domain when the parameter $c_N = n$ - 1.

For simplicity, equal-spacing with empty sectors ST-FDM is called partial symmetrical DDMA. If Doppler frequency $\omega_d$ can be resolved, then $\omega_n$ can be determined based on the predefined $\left\{\omega_c^{(1)}, \omega_c^{(2)}, ..., \omega_c^{(N)}\right\}$. The frequency of the nth channel ($\omega_n$) can be used to retrieve the signal (i.e., complex amplitude) from the nth channel at that location in the Doppler spectrum.

When there are $Q > 1$ Doppler targets (where $Q$ is the number of Doppler targets) at the same range bin whose normalized Doppler frequency are $\left\{\omega_d^{(1)}, \omega_d^{(2)}, ..., \omega_d^{(Q)}\right\}$, a mixed-targets issue can arise. A mixed-targets issue occurs if there are any two targets whose Doppler frequencies meet the criterion:

$$\left|\omega_d^{(i)} - \omega_d^{(j)} + k\right| \in \left\{\omega_c^{(1)}, \omega_c^{(2)}, ..., \omega_c^{(N)}\right\},$$

where $i \neq j, i$ = 1, 2, ..., $Q, j$ = 1, 2, ..., $Q$ and where $k$ is an integer.

Equivalently, in the phase domain: when there exists $Q > 1$ Doppler targets at the same range bin whose Doppler phase are $\left\{\phi_d^{(1)}, \phi_d^{(2)}, ..., \phi_d^{(Q)}\right\}$, a mixed-targets issue occurs if there're any two targets whose Doppler phases meet the criterion:

$$\left|\phi_d^{(i)} - \phi_d^{(j)} + 2k\pi\right| \in \left\{\phi_c^{(1)}, \phi_c^{(2)}, ..., \phi_c^{(N)}\right\},$$

where $i \neq j, i$ = 1, 2, ..., $Q, j$ = 1, 2, ..., $Q$ and $k$ is an integer.

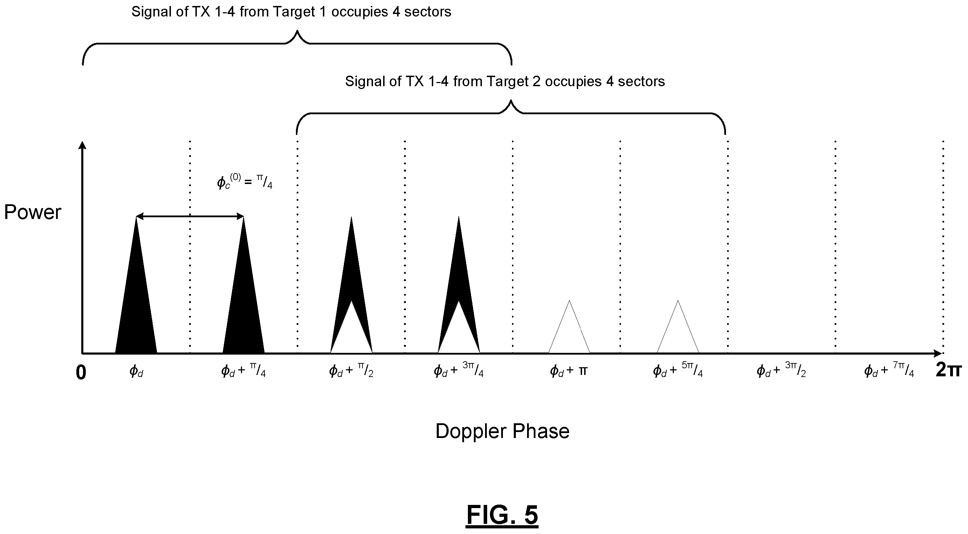

FIG. 5 is an example of the mixed-targets issue. In the example, a MIMO radar has four TX channels and the slow-time Doppler frequency domain is divided into eight sectors. The phase modulation of the TX channels is $\{0, \frac{\pi}{4}, \frac{\pi}{2}, \frac{3\pi}{4}\}$ respectively and there are two Doppler targets at the same range whose Doppler phase are $\phi_d$ and $\phi_d + \frac{\pi}{2}$ respectively. The first target is stronger (in particular, the first target has stronger reflected signal power) than the second target. FIG. 5 shows the slow-time Doppler spectrum of this case. The signals of transmission channels TX1-TX4 from the first target occupy sectors 1-4 of the Doppler spectrum, and the signals of transmission channels TX1-TX4 from the second target occupy sectors 3-6 of the Doppler spectrum. Sectors 7 and 8 are empty (with no signal). In this example, the signal of TX3 and TX4 from the first target is mixed with the signal of TX1 and TX2 from the second target and cannot be separated. The mixed signals can cause issues such as missing Doppler targets, incorrect Doppler frequency estimation, and incorrect angle estimation.

## DOPPLER DETECTION AND INITIAL ESTIMATION

The following steps can be used to detect and determine an initial Doppler phase estimate ($\phi_d$) of a target object (which will later be de-aliased and updated). First, apply an FFT on the slow-time domain and determine the Doppler spectrum for each RX channel. Perform Non-coherent integration across the RX channels to determine the averaged Doppler spectrum. Second, divide the averaged Doppler spectrum evenly into $L$ sectors to generate $L$ sub-spectrums.

Since the phase interval of the original Doppler spectrum is [0 $2\pi$], the phase interval of each sub-spectrum is $\left[0 \quad \frac{2\pi}{L}\right]$. Third, perform non-coherent integration over these $L$ sub-spectrums. Fourth, detect the Doppler target on this averaged sub-spectrum. Detection may be performed using a constant false-alarm rate (CFAR) or other algorithms. Fifth, the Doppler phase of the detected target based on the averaged sub-spectrum is recorded as

$$\phi_0 \subseteq \left[0 \quad \frac{2\pi}{L}\right].$$

## ILLUSTRATIVE EXAMPLE PART 1

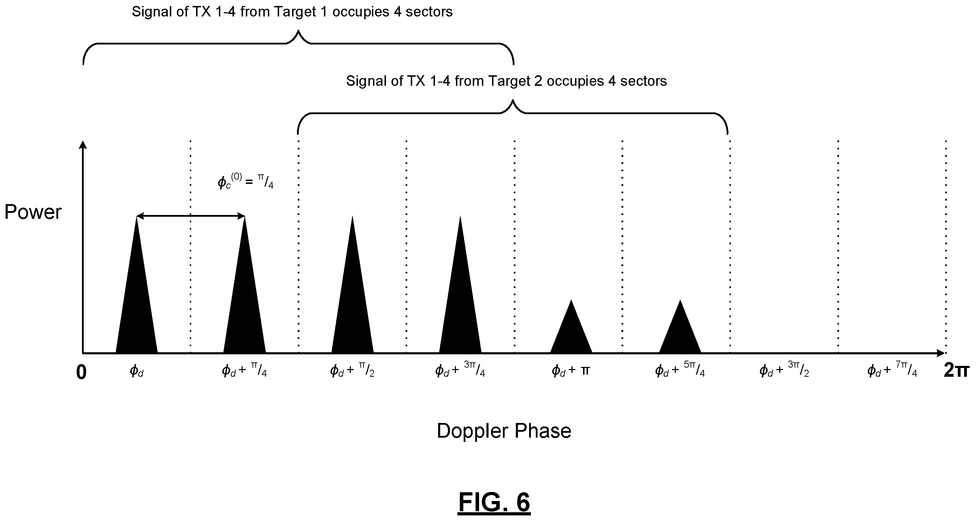

The steps described above can be applied to the previous example of a MIMO radar system with four TX channels and four RX channels. In the example there are two Doppler targets at the same range whose Doppler phase are $\phi_0$ and $\phi_0 + \frac{\pi}{2}$ respectively. At the first Doppler phase $\phi_0$, there are two angular targets (both direct-path targets) one at -0.3$\pi$ and the other at 0.6$\pi$. At the second Doppler phase $\phi_0 + \frac{\pi}{2}$, there is one direct path angular target at 0.2$\pi$. In total, there are three targets in this scenario and their Doppler phase angular phase pairs are ($\phi_0$, -0.3$\pi$), ($\phi_0$, 0.6$\pi$) and ($\phi_0 + \frac{\pi}{2}, 0.2\pi$) respectively. Applying an FFT on the slow-time domain and performing non-coherent integration across the four RX channels results in the averaged Doppler spectrum shown in FIG. 6.

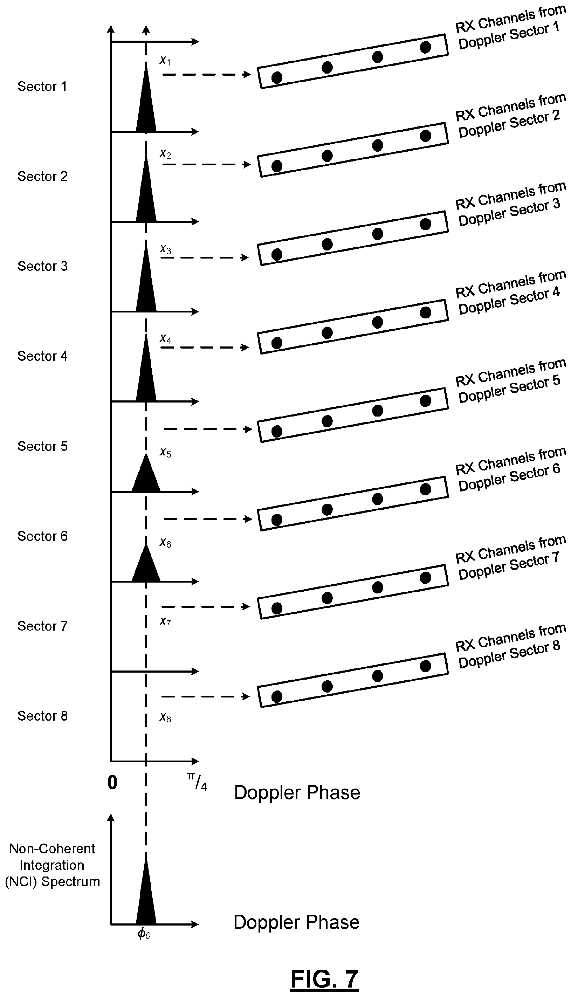

As shown in FIG. 7, dividing this averaged Doppler spectrum evenly into eight sectors results in eight sub-spectrums. Performing non-coherent integration over the eight sub-spectrums results in a peak in the averaged sub-spectrum at Doppler phase $\phi_0$. For each sector, the complex amplitude values for the four RX channels are extracted at the Doppler phase bin $\phi_0$, to form a 1 x 4 vector $x_i$, where i=1, 2, ..., 8. For this specific case, $x_7$ and $x_8$ are a noise vector (in other words, $x_7$ and $x_8$ do not include signal from the target object - only noise). The 8 x 4 2-D complex data matrix $X$ is formed as

$$X = \begin{bmatrix} x_1 \\ x_2 \\ \vdots \\ x_8 \end{bmatrix}.$$

## FORMING A 2-D DATA MATRIX FOR ANGLE FINDING

A bin selection set for the slow-time Doppler spectrum is constructed using $\phi_0$ as the reference point, which results in

$$\left\{ \phi_0, \phi_0 + \phi_c^{(0)}, \phi_0 + 2\phi_c^{(0)}, \phi_0 + 3\phi_c^{(0)}, ..., \phi_0 + (L-1)\phi_c^{(0)} \right\} =$$
$$\left\{ \phi_0, \ \phi_0 + \frac{2\pi}{L}, \phi_0 + \frac{2\pi}{L} \cdot 2, \ \phi_0 + \frac{2\pi}{L} \cdot 3, ..., \phi_0 + \frac{2\pi}{L} \cdot (L-1) \right\}.$$

The signal from TX channels resides at some of these locations.

Since there are $L$ sectors in the Doppler spectrum and $M$ RX channels, an $L \times M$ 2-D complex matrix $X$ is initialized. The element on the lth row and mth column of $X$ is denoted as $x_{l,m}$, the lth row of $X$ as $X_{l,:}$ and the mth column of $X$ as $X_{:,m}$, where $l$ = 1, 2, ..., $L$ and $m$ = 1, 2, ..., $M$.

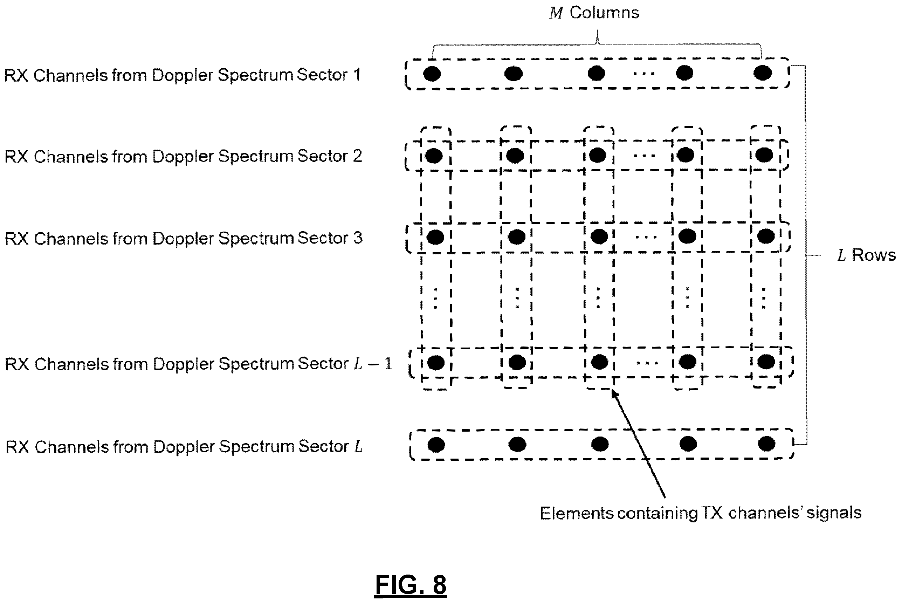

For the mth RX channel, the $L$ complex amplitudes at the phase locations $\left\{ \phi_0, \phi_0 + \frac{2\pi}{L}, \phi_0 + \frac{2\pi}{L} \cdot 2, \phi_0 + \frac{2\pi}{L} \cdot 3, ..., \phi_0 + \frac{2\pi}{L} \cdot (L-1) \right\}$ are picked from its Doppler spectrum to form the $L \times 1$ vector $X_{:,m}$. As illustrated in FIG. 8, $X_{l,:}$ contains data from each RX channel for the lth Doppler sector. $X_{:,m}$ contains data from each Doppler sector for the mth RX channel. Some elements of $X_{:,m}$ contain signal from the TX channels and some elements may contain only noise.

Mathematically, the horizontal dimension of this matrix $X$ measures the direction-of-arrival (DOA) angular phase based on the data from all RX channels. The vertical dimension of this matrix $X$ measures the direction-of-departure (DOD) angular phase if the elements containing the TX channels' signal are identified.

**DOPPLER DE-ALIASING AND ANGLE FINDING STEP 1: 1-D ANGULAR PHASE ESTIMATION ON DOA DIMENSION**

After Doppler detection and initial estimation is completed, and the 2-D matrix is formed (assuming there are P targets in data matrix $X$, and initializing the residue data matrix $Y^{(1)} = X$), the following steps are performed in a loop to detect all the targets one by one. $Y_{l,:}^{(p)}$ contains all RX data from the lth Doppler spectrum sector (for the pth target, where $p = 1$, 2, ..., P). Since there are $L$ Doppler spectrum sectors, there are $L$ snapshots of RX array measurement:

$$Y^{(p)} = \begin{bmatrix} Y_{1,:}^{(p)} \\ Y_{2,:}^{(p)} \\ \vdots \\ Y_{L,:}^{(p)} \end{bmatrix}.$$

1-D spectrum-based angular phase estimation algorithms (such as FFT and/or Iterative Adaptive Approach (IAA), etc.) can be used to estimate the DOA angular phase. 1-D FFT or IAA is applied to each row of matrix $Y^{(p)}$ and generates $L$ FFT spectrums:

$$FFT\{Y^{(p)}\} = \begin{bmatrix} FFT\{Y_{1,:}^{(p)}\} \\ FFT\{Y_{2,:}^{(p)}\} \\ \vdots \\ FFT\{Y_{L,:}^{(p)}\} \end{bmatrix}.$$

Next, non-coherent integration (NCI) is applied to the $L$ FFT spectrums by

$$NCI\{FFT\{Y^{(p)}\}\} = \left|FFT\{Y_{1,:}^{(p)}\}\right| + \left|FFT\{Y_{2,:}^{(p)}\}\right| + \cdots + \left|FFT\{Y_{L,:}^{(p)}\}\right|.$$

Next the max peak in the NCI spectrum $NCI\{FFT\{Y^{(p)}\}\}$ is found. The angular phase $\mu_p$, where $-\pi \leq \mu_p < \pi$, corresponding to this peak is the DOA angular phase of the pth target.

**DOPPLER DE-ALIASING AND ANGLE FINDING STEP 2: BEAMFORMING THE RX ARRAY AND ESTIMATING TX MEASUREMENT**

Continuing to the next step in the loop, for the angular target detected in Step 1, at the estimated angular phase $\mu_p$, the normalized steering vector $a_R^{(p)}$ for the RX array can be generated based on the RX array's layout. For example, if the RX array is a uniform linear array (ULA), the normalized $a_R^{(p)}$ is formulated as

$$a_R^{(p)} = \frac{[0 \quad e^{-j\mu_p} \quad e^{-j2\mu_p} \quad \cdots \quad e^{-j(M-2)\mu_p} \quad e^{-j(M-1)\mu_p}]^T}{\sqrt{M}},$$

where $a_R^{(p)}$ is a $M \times 1$ complex vector.

The TX measurement for the pth target can be estimated by beamforming the RX array to the DOA phase of the pth target by

$$y_T^{(p)} = \left(a_R^{(p)}\right)^H \left(Y^{(p)}\right)^T,$$

where $y_T^{(p)}$ is an $1 \times L$ complex vector.

**DOPPLER DE-ALIASING AND ANGLE FINDING STEP 3: IDENTIFYING TARGET'S SECTOR INDEX IN DOPPLER SPECTRUM, DE-ALIASING DOPPLER PHASE ESTIMATION AND EXTRACTING THE TRUE TX MEASUREMENT**

$y_T^{(p)}$ has $L$ elements, in which $N$ elements contain the data from $N$ TX channels while the other $L - N$ elements contain noise or no data from the TX channels. Identifying the data from the $N$ TX channels is equivalent to identifying the group of $N$ elements in $y_T^{(p)}$ circularly at location $\{c_1, c_2, ..., c_N\}$ that has the largest summation of magnitudes.

Mathematically, this problem can be formulated and solved as described below. First, form a Doppler spectrum sector index vector:

$$s_0 = \{1, 2, ..., L - 2, L - 1, L, 1, 2, ..., L - 2, L - 1\}.$$

Based on the partial symmetrical DDMA waveform's parameter,

$$c^{(0)} = \{c_1, c_2, ..., c_N\} - c_1 = \{0, c_2 - c_1, ..., c_N - c_1\}.$$

$L$ groups of candidate Doppler spectrum sector indices can be formed as

$$C = \begin{bmatrix} c^{(0)} + 1 \\ c^{(0)} + 2 \\ \vdots \\ c^{(0)} + L \end{bmatrix}.$$

Denoting the $l$th row of $C$ is $C_{l,:}$ which is a $1 \times N$ vector and the $L$ groups of circularly shifted candidate Doppler spectrum sector indices are

$$S = \begin{bmatrix} s_0\{C_{1,:}\} \\ s_0\{C_{2,:}\} \\ \vdots \\ s_0\{C_{L,:}\} \end{bmatrix}$$

and denote the lth row of $S$ is $S_{l,:}$ which is also an $1 \times N$ vector.

Next, find the index $l_p$ such that

$$\max_{l_p=1,2,...,L} \left(\sum \left|y_T^{(p)}\{S_{l_p,:}\}\right|\right).$$

Consequently, the signal from the first TX channel is located at the $l_p$th sector of the Doppler spectrum, and the de-aliased Doppler phase estimation of the pth target is

$$\phi_d^{(p)} = \phi_0 + \left(l_p - 1\right)\phi_c^{(0)} = \phi_0 + \left(l_p - 1\right)\frac{2\pi}{L}.$$

The extracted TX measurement for the pth target is an $1 \times N$ complex vector defined by

$$z_T^{(p)} = y_T^{(p)}\{S_{l_p,:}\}.$$

In other words, the elements from $y_T^{(p)}$ are selected based on indices from $S_{l_p,:}$.

## DOPPLER DE-ALIASING AND ANGLE FINDING STEP 4: 1-D DOD ESTIMATION USING TX MEASUREMENT

$z_T^{(p)}$ is the TX measurement vector for the pth target whose Doppler phase estimate is $\phi_d^{(p)}$ and DOA phase estimation is $\mu_p$. A 1-D FFT is applied to vector $z_T^{(p)}$ for generating an FFT spectrum. The angular phase $v_p$, where $-\pi \leq v_p < \pi$, corresponding to the maximum peak in this FFT spectrum is the DOD angular phase of the pth target. For the pth target, its Doppler phase, DOA phase, and DOD phase have been estimated as $\phi_d^{(p)}$, $\mu_p$, and $v_p$, respectively.

## DOPPLER DE-ALIASING AND ANGLE FINDING STEP 5: CALCULATING RESIDUE SIGNAL

Next the reconstructed $1 \times L$ signal vector of the TX channels coming from the pth target is initialized as

$$\widehat{y}_T^{(p)} = [0 \quad 0 \quad \cdots \quad 0].$$

The elements of $\widehat{y}_T^{(p)}$ at indices group $S_{l_p,:}$ contain the real signal from the pth target and the other elements contain noise or no signal, therefore $\widehat{y}_T^{(p)}$ is updated as

$$\widehat{y}_T^{(p)}\{S_{l_p,:}\} = z_T^{(p)}.$$

Subtracting the reconstructed signal of the pth target from the current 2-D measurement matrix $Y^{(p)}$, the residue data matrix is

$$Y^{(p+1)} = Y^{(p)} - \left(\widehat{y}_T^{(p)}\right)^T \left(a_R^{(p)}\right)^T.$$

## DOPPLER DE-ALIASING AND ANGLE FINDING STEP 6: STOPPING CRITERION

If the energy of the residue signal is small (for example an energy level that does not meet a threshold), then the algorithm outputs all the detected targets from previous iterations. In some implementations, the threshold is defined as | $Y^{(p+1)}| < \varepsilon$, where $\varepsilon$ is a pre-defined threshold which determines the detection sensitivity. Otherwise, Steps 1-6 are repeated to find another target.

In some implementations, DOA angle and DOD angle are automatically determined based on the DOA phase and DOD phase, respectively. First, denote phase as $\phi$, angle as $\theta$, and the relationship between them is given as

$$\phi = \frac{2\pi d \sin(\theta)}{\lambda}.$$

Generally, d and $\lambda$ are both known parameters in a given radar design (d is antenna spacing in the antenna array and lambda is the wavelength).

## ILLUSTRATIVE EXAMPLE PART 2

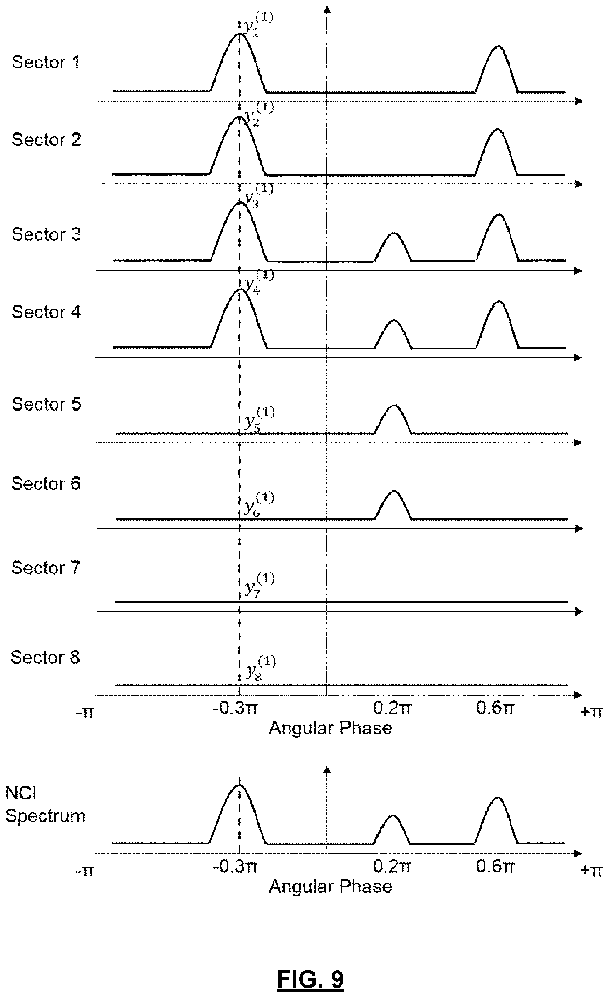

The steps described above can be applied to the previous example of a MIMO radar system with four TX channels and four RX channels. The angle spectrum for the four RX channels from each Doppler sector and the averaged spectrum for the data matrix $\boldsymbol{X}$ is shown in FIG. 9. In the averaged angle spectrum, the maximum peak is at angular phase $\mu_1 = -0.3\pi$. After beamforming the RX measurements to $\mu_1$, the complex amplitude vector across eight Doppler sectors can be represented as

$$\boldsymbol{y}_T^{(1)} = \begin{bmatrix} y_1^{(1)} & y_2^{(1)} & \cdots & y_8^{(1)} \end{bmatrix}.$$

Among the eight elements in $\boldsymbol{y}_T^{(1)}, \{y_1^{(1)}, y_2^{(1)}, y_3^{(1)}, y_4^{(1)}\}$ is the group that has the largest summation of magnitudes circularly at the DDMA sector location. Therefore, the signal from the first TX channel is located at the first sector of the Doppler spectrum, and the de-aliased Doppler phase of the first target is

$$\phi_d^{(1)} = \phi_0 + (1-1)\phi_c^{(0)} = \phi_0 + (1-1)\frac{\pi}{4} = \phi_0.$$

The extracted TX measurement for the first target is

$$\boldsymbol{z}_T^{(1)} = \begin{bmatrix} y_1^{(1)} & y_2^{(1)} & y_3^{(1)} & y_4^{(1)} \end{bmatrix}.$$

The DOD phase can then be estimated by applying an FFT on $\boldsymbol{z}_T^{(1)}$.

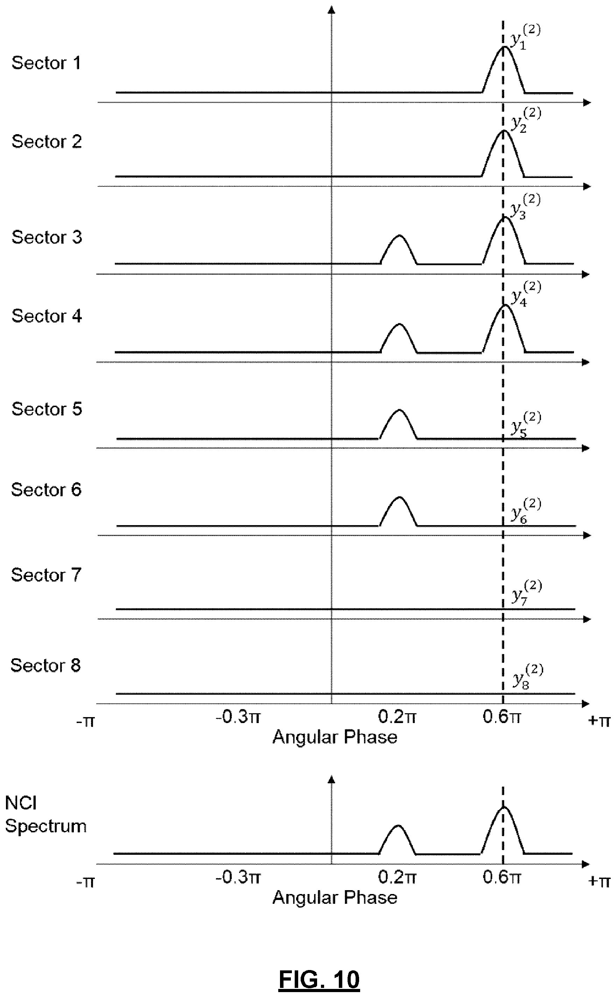

The residue data matrix is obtained after subtracting the reconstructed signal of the first target from the 2-D measurement matrix. The angle spectrum for the four RX channels from each Doppler sector and the averaged spectrum for this residue data matrix are shown in FIG. 10. In the averaged angle spectrum, the maximum peak is at angular phase $\mu_2 = 0.6\pi$. After beamforming the RX measurements to $\mu_2$, the complex amplitude vector across the eight Doppler sectors can be represented as

$$\boldsymbol{y}_T^{(2)} = \begin{bmatrix} y_1^{(2)} & y_2^{(2)} & \cdots & y_8^{(2)} \end{bmatrix}.$$

Among the eight elements in $\boldsymbol{y}_T^{(2)}, \{y_1^{(2)}, y_2^{(2)}, y_3^{(2)}, y_4^{(2)}\}$ is the group that has the largest summation of magnitudes circularly at the DDMA sector location. Therefore, the signal from the first TX channel is located at the first sector of the Doppler spectrum, and the de-aliased Doppler phase of the second target is

$$\phi_d^{(2)} = \phi_0 + (1-1)\phi_c^{(0)} = \phi_0 + (1-1)\frac{\pi}{4} = \phi_0.$$

Then, the extracted TX measurement for the second target is

$$\boldsymbol{z}_T^{(2)} = \begin{bmatrix} y_1^{(2)} & y_2^{(2)} & y_3^{(2)} & y_4^{(2)} \end{bmatrix}.$$

DOD phase can be estimated by applying an FFT on $\boldsymbol{z}_T^{(2)}$.

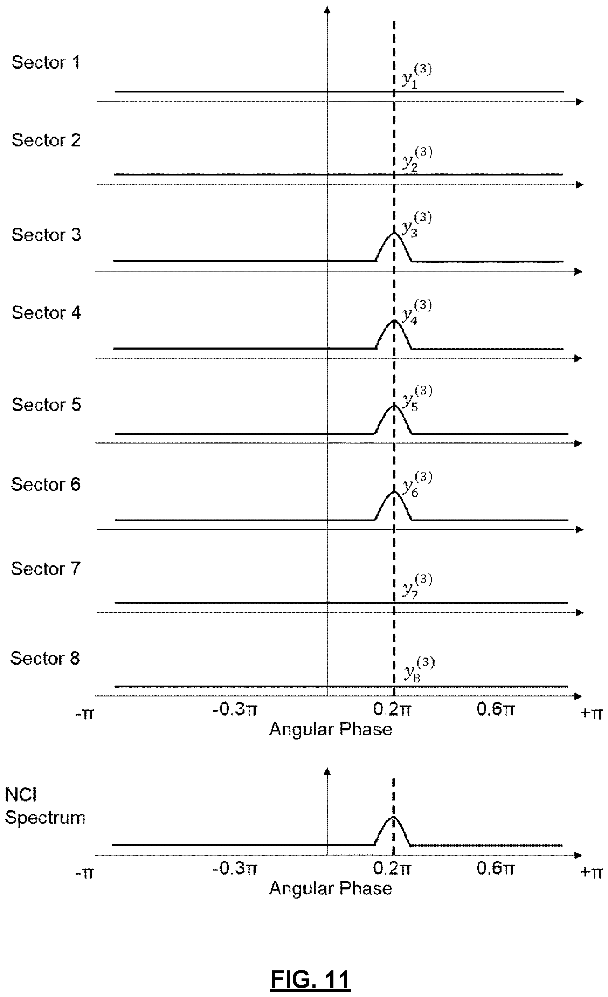

The updated residue matrix is obtained after further subtracting the reconstructed signal of the second target from the current 2-D measurement matrix. The angle spectrum for the four RX channels from each Doppler sector, and the averaged spectrum, are shown in FIG. 11. In the averaged angle spectrum, the maximum peak is at angular phase $\mu_3 = 0.2\pi$. After beamforming the RX measurements to $\mu_3$, we can get the complex amplitude vector across eight Doppler sectors as

$$\boldsymbol{y}_T^{(3)} = \begin{bmatrix} y_1^{(3)} & y_2^{(3)} & \cdots & y_8^{(3)} \end{bmatrix}.$$

Among the eight elements in $\boldsymbol{y}_T^{(3)}, \{y_3^{(3)}, y_4^{(3)}, y_5^{(3)}, y_6^{(3)}\}$ is the group that has the largest summation of magnitudes circularly at the DDMA sector location. Therefore, the signal from the first TX channel is located at the third sector of the Doppler spectrum, and the de-aliased Doppler phase of the third target is

$$\phi_d^{(2)} = \phi_0 + (3-1)\phi_c^{(0)} = \phi_0 + (3-1)\frac{\pi}{4} = \phi_0 + \frac{\pi}{2}.$$

The extracted TX measurement for the third target is

$$\mathbf{z}_T^{(3)} = \begin{bmatrix} y_3^{(3)} & y_4^{(3)} & y_5^{(3)} & y_6^{(3)} \end{bmatrix}.$$

The DOD phase can be estimated by applying an FFT on $\mathbf{z}_T^{(3)}$ .

**FLOWCHARTS**

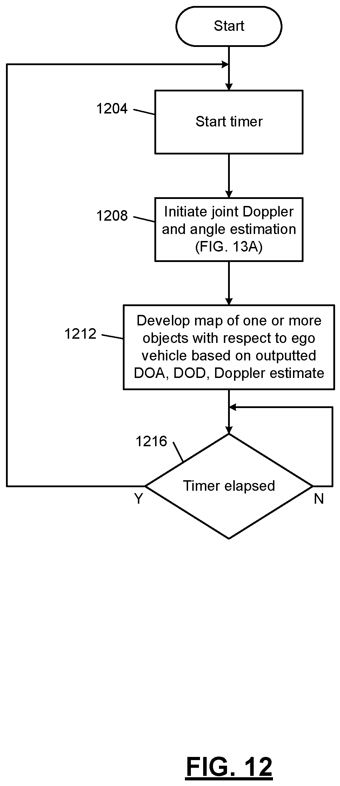

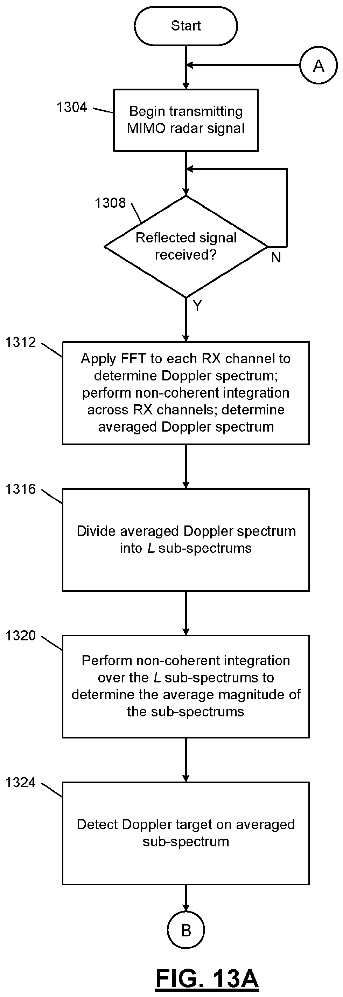

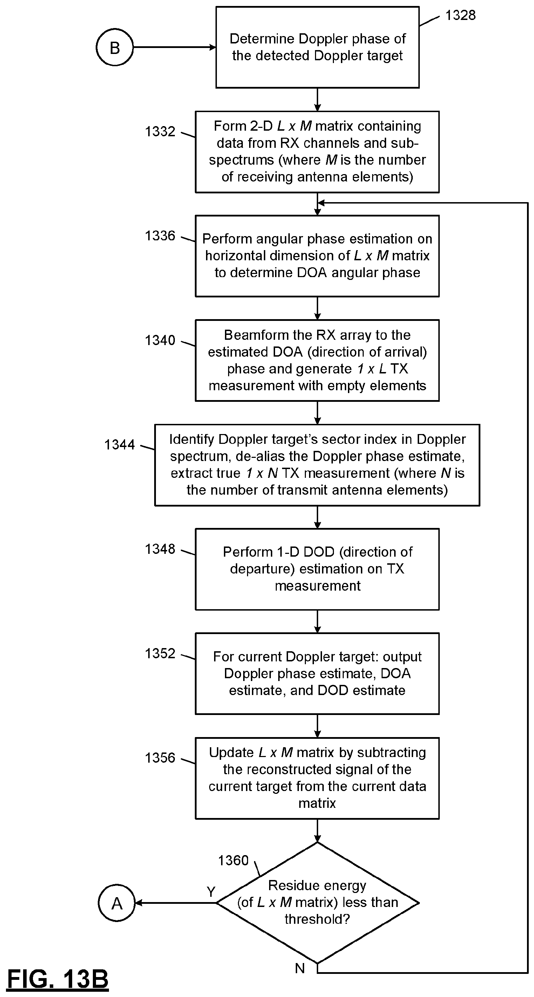

FIG. 12 is an example method for initiating the joint Doppler and angle estimation method described above. At 1204, control begins and a timer begins. Control continues to 1208 and initiates the joint Doppler and angle estimation (described above and with regard to FIGS. 13A-13B). At 1212, control performs additional processing (such as analysis with additional sensors, additional angle finding, velocity, and/or range finding) and develops a map of objects near the host radar system housed by the ego vehicle based on the DOA, DOD, and Doppler phase estimates produced at 1208. At 1216, control determines if the timer has elapsed. If the timer has not elapsed, control remains at 1216. If the timer has elapsed, control returns to 1204. In some implementations, control begins in response to user input (such as turning on the vehicle or activating autonomous and/or assisted driving functionalities such as lane change assistance, parking assistance, cruise control, lane centering, or fully autonomous vehicle control). In some implementations, the method described in the present disclosure runs repeatedly in an interval (for example, every 100ms, 300ms, 500ms, 1s, 5s, 10s, etc.). In some implementations, all radar signals are processed via the described method.

FIGS. 13A-13B are a flowchart of an example method for joint Doppler and angle estimation. At 1304, control begins transmitting a MIMO radar signal that includes a set of signal segments (such as a set of FMCW chirps). At 1308 control determines whether reflected signals have been received via the MIMO receiver channels. If no reflected signals have been received, control remains at 1308. If reflected signals have been received, control transfers to 1312. At 1312, control applies an FFT to each MIMO receiver (RX) channel to determine the Doppler spectrum. Control then performs non-coherent integration (NCI) across all RX channels to determine the averaged Doppler spectrum. At 1316, control divides the average Doppler spectrum into $L$ number of equal sub-spectrums (where each of the sub-spectrums are equal-width frequency ranges and are non-overlapping).

At 1320, control performs NCI over the $L$ sub-spectrums to determine the average magnitude of the sub-spectrums. At 1324, control detects a Doppler target on the average sub-spectrum. At 1328 control determines the Doppler phase of the detected Doppler target. At 1332, control forms a 2-D matrix ($L \times M$, where $M$ is the number of MIMO receiver channels/elements) with the data from the RX channels and the sub-spectrums. At 1336, control performs angular phase estimation on each row (the DOA dimension) of the $L \times M$ matrix to determine the DOA angular phase of the target. At 1340, control beamforms the RX array to the DOA phase of the target to estimate the TX measurement. At 1344, control identifies the target's sector index in the Doppler spectrum, de-aliases the Doppler phase estimate, and extracts the true $1 \times N$ (where $N$ is the number of transmit antenna elements) TX measurement. At 1348, control performs a 1-D DOD estimation on the TX measurement. At 1352, control outputs the Doppler estimate phase, DOA phase estimate, and the DOD phase estimate for the current target. At 1356, control updates the $L \times M$ matrix by subtracting the reconstructed signal of the current target from the current $L \times M$ matrix. At 1360, control determines whether the residue energy of the $L \times M$ matrix is less than the threshold. If yes, control transfers to 1304. If the residue energy is not less than the threshold, control transfers to 1336.

**CLAUSES**

Various example embodiments of the invention are described in the following clauses.

Clause 1: A method for processing a radar signal that includes a set of signal segments, the method comprising:

receiving the set of signal segments via a set of antenna receiver channels;
dividing the radar signal into a set of sub-spectrums;
forming a first matrix based on data from the set of antenna receiver channels and data from the set of sub-spectrums;
determining whether an energy level associated with the first matrix has met a threshold energy level;

in response to a determination that the energy level of the first matrix has met the threshold energy level, generating a reconstructed signal, wherein the generating the reconstructed signal includes:

determining a direction of arrival phase, wherein the determining the direction of arrival phase includes performing angular phase estimation on a set of sub-matrices of the first matrix,
generating a first set of measurements, wherein the generating the first set of measurements includes beamforming the set of antenna receiver channels to the direction of arrival phase,
based on the first set of measurements, determining an index value associated with a sub-spectrum of the set of sub-spectrums associated with a target object,
determining a Doppler phase based on the index value,
determining a second set of measurements based on the index value, and
based on the second set of measurements, determining a direction of departure phase associated with the target object;

subtracting data associated with the reconstructed signal from the first matrix;
outputting the direction of departure phase, the direction of arrival phase, and the Doppler phase; and
tracking a location of the target object with respect to a vehicle associated with the set of antenna receiver channels based on the direction of departure phase, the direction of arrival phase, and the Doppler phase.

Clause 2: The method of clause 1 wherein:

the set of signal segments includes a plurality of signal segments,
the set of antenna receiver channels includes a plurality of antenna receiver channels, and
the plurality of signal segments corresponds one-to-one with the plurality of antenna receiver channels.

Clause 3: The method of any one of clauses 1-2 further comprising autonomously controlling a vehicle to avoid a collision with the target object.
Clause 4: The method of any one of clauses 1-3 wherein each sub-matrix of the set of sub-matrices is a row of the first matrix.
Clause 5: The method of any one of clauses 1-4 further comprising, after the subtracting the reconstructed signal from the first matrix:

determining whether the energy level associated with the first matrix has met a threshold energy level;
in response to a determination that the energy level of the first matrix has met the threshold energy level, generating a second reconstructed signal; and
subtracting the second reconstructed signal from the first matrix.

Clause 6: The method of clause 5 wherein generating the second reconstructed signal includes:

determining a second direction of arrival phase, wherein the determining of arrival phase includes performing angular phase estimation on a second set of sub-matrices of the first matrix,
generating a third set of measurements, wherein the generating the third set of measurements includes beamforming the set of antenna receiver channels to the second direction of arrival phase,
based on the third set of measurements, determining a second index value associated with a second sub-spectrum of the set of sub-spectrums associated with a second target object,
determining a second Doppler phase based on the second index value,
determining a fourth set of measurements based on the second index value, and
based on the fourth set of measurements, determining a second direction of departure phase associated with the second target object.

Clause 7: The method of any one of clauses 1-6 wherein the set of sub-spectrums is a set of non-overlapping frequency ranges.
Clause 8: The method of clause 7 wherein the set of sub-spectrums is a set of equal-width frequency ranges.
Clause 9: The method of any one of clauses 1-8 further comprising:

transforming the radar signal into a second spectrum;
determining whether the radar signal indicates that the target object is present in the set of sub-spectrums; and
determining a Doppler phase of the radar signal associated with the target object.

Clause 10: The method of clause 9 further comprising determining an average of the second spectrum.

Clause 11: The method of clause 9 further comprising determining an average magnitude of the radar signal in each sub-spectrum of the set of sub-spectrums.

Clause 12: The method of clause 9 wherein transforming the radar signal into the second spectrum includes performing a fast Fourier transform (FFT) on a respective signal segment of the set of signal segments received by each antenna receiver channel of the set of antenna receiver channels.

Clause 13: Software comprising instructions that implement the method of any one of clauses 1-12.

Clause 14: A non-transitory computer-readable medium comprising processor-executable instructions, wherein the instructions implement the method of any one of clauses 1-12.

Clause 15: A system comprising:

memory hardware configured to store instructions; and
processor hardware configured to execute instructions stored by the memory hardware, wherein the instructions implement the method of any one of clauses 1-12.

CONCLUSION

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Similarly, one or more instructions stored in a non-transitory computer-readable medium may be executed in a different order (or concurrently) without altering the principles of the present disclosure. Unless indicated otherwise, numbering or other labeling of instructions or method steps is done for convenient reference, not to indicate a fixed order.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements (for example, between modules, circuit elements, semiconductor layers, etc.) are described using various terms, including "connected," "engaged," "coupled," "adjacent," "next to," "on top of," "above," "below," and "disposed." Unless explicitly described as being "direct," when a relationship between first and second elements is described in the above disclosure, that relationship encompasses a direct relationship where no other intervening elements are present between the first and second elements as well as an indirect relationship where one or more intervening elements are present between the first and second elements.

As noted below, the term "set" generally means a grouping of one or more elements. However, in various implementations a "set" may, in certain circumstances, be the empty set (in other words, the set has zero elements in those circumstances). As an example, a set of search results resulting from a query may, depending on the query, be the empty set. In contexts where it is not otherwise clear, the term "non-empty set" can be used to explicitly denote exclusion of the empty set - that is, a non-empty set will always have one or more elements.

A "subset" of a first set generally includes some of the elements of the first set. In various implementations, a subset of the first set is not necessarily a proper subset: in certain circumstances, the subset may be coextensive with (equal to) the first set (in other words, the subset may include the same elements as the first set). In contexts where it is not otherwise clear, the term "proper subset" can be used to explicitly denote that a subset of the first set must exclude at least one of the elements of the first set. Further, in various implementations, the term "subset" does not necessarily exclude the empty set. As an example, consider a set of candidates that was selected based on first criteria and a subset of the set of candidates that was selected based on second criteria; if no elements of the set of candidates met the second criteria, the subset may be the empty set. In contexts where it is not otherwise clear, the term "non-empty subset" can be used to explicitly denote exclusion of the empty set.

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" can be replaced with the term "controller" or the term "circuit." In this application, the term "controller" can be replaced with the term "module." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); processor hardware (shared, dedicated, or group) that executes code; memory hardware (shared, dedicated, or group) that is coupled with the processor hardware and stores code executed by the processor hardware; other suitable hardware components that provide the described functionality; or a combination of some or all of the above, such as in a system-on-chip.

The module may include one or more interface circuits. In some examples, the interface circuit(s) may implement wired or wireless interfaces that connect to a local area network (LAN) or a wireless personal area network (WPAN). Examples of a LAN are Institute of Electrical and Electronics Engineers (IEEE) Standard 802.11-2020 (also known as the WIFI wireless networking standard) and IEEE Standard 802.3-2018 (also known as the ETHERNET wired networking standard). Examples of a WPAN are IEEE Standard 802.15.4 (including the ZIGBEE standard from the ZigBee Alliance) and, from the Bluetooth Special Interest Group (SIG), the BLUETOOTH wireless networking standard (including Core Specification versions 3.0, 4.0, 4.1, 4.2, 5.0, and 5.1 from the Bluetooth SIG).

The module may communicate with other modules using the interface circuit(s). Although the module may be depicted in the present disclosure as logically communicating directly with other modules, in various implementations the module may actually communicate via a communications system. The communications system includes physical and/or virtual networking equipment such as hubs, switches, routers, and gateways. In some implementations, the communications system connects to or traverses a wide area network (WAN) such as the Internet. For example, the communications system may include multiple LANs connected to each other over the Internet or point-to-point leased lines using technologies including Multiprotocol Label Switching (MPLS) and virtual private networks (VPNs).

In various implementations, the functionality of the module may be distributed among multiple modules that are connected via the communications system. For example, multiple modules may implement the same functionality distributed by a load balancing system. In a further example, the functionality of the module may be split between a server (also known as remote, or cloud) module and a client (or, user) module. For example, the client module may include a native or web application executing on a client device and in network communication with the server module.

Some or all hardware features of a module may be defined using a language for hardware description, such as IEEE Standard 1364-2005 (commonly called "Verilog") and IEEE Standard 1076-2008 (commonly called "VHDL"). The hardware description language may be used to manufacture and/or program a hardware circuit. In some implementations, some or all features of a module may be defined by a language, such as IEEE 1666-2005 (commonly called "SystemC"), that encompasses both code, as described below, and hardware description.

The term code, as used above, may include software, firmware, and/or microcode, and may refer to programs, routines, functions, classes, data structures, and/or objects. Shared processor hardware encompasses a single microprocessor that executes some or all code from multiple modules. Group processor hardware encompasses a microprocessor that, in combination with additional microprocessors, executes some or all code from one or more modules. References to multiple microprocessors encompass multiple microprocessors on discrete dies, multiple microprocessors on a single die, multiple cores of a single microprocessor, multiple threads of a single microprocessor, or a combination of the above.

The memory hardware may also store data together with or separate from the code. Shared memory hardware encompasses a single memory device that stores some or all code from multiple modules. One example of shared memory hardware may be level 1 cache on or near a microprocessor die, which may store code from multiple modules. Another example of shared memory hardware may be persistent storage, such as a solid state drive (SSD) or magnetic hard disk drive (HDD), which may store code from multiple modules. Group memory hardware encompasses a memory device that, in combination with other memory devices, stores some or all code from one or more modules. One example of group memory hardware is a storage area network (SAN), which may store code of a particular module across multiple physical devices. Another example of group memory hardware is random access memory of each of a set of servers that, in combination, store code of a particular module. The term memory hardware is a subset of the term computer-readable medium.

The apparatuses and methods described in this application may be partially or fully implemented by a special-purpose computer created by configuring a general-purpose computer to execute one or more particular functions embodied in computer programs. Such apparatuses and methods may be described as computerized or computer-implemented apparatuses and methods. The functional blocks and flowchart elements described above serve as software specifications, which can be translated into the computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special-purpose computer, device drivers that interact with particular devices of the special-purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective-C, Swift, Haskell, Go, SQL, R, Lisp, Java®, Fortran, Perl, Pascal, Curl, OCaml, JavaScript®, HTML5 (Hypertext Markup Language 5th revision), Ada, ASP (Active Server Pages), PHP (PHP: Hypertext Preprocessor), Scala, Eiffel, Smalltalk, Erlang, Ruby, Flash®, Visual Basic®, Lua, MATLAB, SIMULINK, and Python®.

The term non-transitory computer-readable medium does not encompass transitory electrical or electromagnetic signals propagating through a medium (such as on a carrier wave). Non-limiting examples of a non-transitory computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The term "set" generally means a grouping of one or more elements. The elements of a set do not necessarily need to have any characteristics in common or otherwise belong together. The phrase "at least one of A, B, and C" should be construed to mean a logical (A OR B OR C), using a non-exclusive logical OR, and should not be construed to mean "at least one of A, at least one of B, and at least one of C." The phrase "at least one of A, B, or C" should be construed to mean a logical (A OR B OR C), using a non-exclusive logical OR.

**Claims**

1. A method for processing a radar signal that includes a set of signal segments, the method comprising:

   receiving the set of signal segments via a set of antenna receiver channels;
   dividing the radar signal into a set of sub-spectrums;
   forming a first matrix based on data from the set of antenna receiver channels and data from the set of sub-spectrums;
   determining whether an energy level associated with the first matrix has met a threshold energy level;
   in response to a determination that the energy level of the first matrix has met the threshold energy level, generating a reconstructed signal, wherein the generating the reconstructed signal includes:

      determining a direction of arrival phase, wherein the determining the direction of arrival phase includes performing angular phase estimation on a set of sub-matrices of the first matrix,
      generating a first set of measurements, wherein the generating the first set of measurements includes beamforming the set of antenna receiver channels to the direction of arrival phase,
      based on the first set of measurements, determining an index value associated with a sub-spectrum of the set of sub-spectrums associated with a target object,
      determining a Doppler phase based on the index value,
      determining a second set of measurements based on the index value, and
      based on the second set of measurements, determining a direction of departure phase associated with the target object;

   subtracting data associated with the reconstructed signal from the first matrix;
   outputting the direction of departure phase, the direction of arrival phase, and the Doppler phase; and
   tracking a location of the target object with respect to a vehicle associated with the set of antenna receiver channels based on the direction of departure phase, the direction of arrival phase, and the Doppler phase.

2. The method of claim 1 wherein:

   the set of signal segments includes a plurality of signal segments,
   the set of antenna receiver channels includes a plurality of antenna receiver channels, and
   the plurality of signal segments corresponds one-to-one with the plurality of antenna receiver channels.

3. The method of claim 1 wherein the set of sub-spectrums is a set of non-overlapping frequency ranges.

4. The method of claim 3 wherein the set of sub-spectrums is a set of equal-width frequency ranges.

**5.** The method of claim 1 further comprising:

transforming the radar signal into a second spectrum;
determining an average of the second spectrum;
determining an average magnitude of the radar signal in each sub-spectrum of the set of sub-spectrums;
determining whether the radar signal indicates that the target object is present in the set of sub-spectrums; and
determining a Doppler phase of the radar signal associated with the target object.

**6.** The method of claim 5 wherein transforming the radar signal into the second spectrum includes performing a fast Fourier transform (FFT) on a respective signal segment of the set of signal segments received by each antenna receiver channel of the set of antenna receiver channels.

**7.** The method of claim 1 further comprising autonomously controlling a vehicle to avoid a collision with the target object.

**8.** The method of claim 1 wherein each sub-matrix of the set of sub-matrices is a row of the first matrix.

**9.** The method of claim 1 further comprising, after the subtracting the reconstructed signal from the first matrix:

determining whether the energy level associated with the first matrix has met a threshold energy level;
in response to a determination that the energy level of the first matrix has met the threshold energy level, generating a second reconstructed signal, wherein the generating the second reconstructed signal includes:

determining a second direction of arrival phase, wherein the determining of arrival phase includes performing angular phase estimation on a second set of sub-matrices of the first matrix,
generating a third set of measurements, wherein the generating the third set of measurements includes beamforming the set of antenna receiver channels to the second direction of arrival phase,
based on the third set of measurements, determining a second index value associated with a second sub-spectrum of the set of sub-spectrums associated with a second target object,
determining a second Doppler phase based on the second index value,
determining a fourth set of measurements based on the second index value, and
based on the fourth set of measurements, determining a second direction of departure phase associated with the second target object; and

subtracting the second reconstructed signal from the first matrix.

**10.** A computer program comprising instructions which, when executed by one or more processors, causes the method of any one of claims 1 to 9 to be performed.

**11.** A system for processing a radar signal that includes a set of signal segments, the system comprising:

memory hardware configured to store instructions; and
processor hardware configured to execute instructions stored by the memory hardware, wherein the instructions include:

receiving the set of signal segments via a set of antenna receiver channels;
dividing the radar signal into a set of sub-spectrums;
forming a first matrix based on data from the set of antenna receiver channels and data from the set of sub-spectrums;
determining whether an energy level associated with the first matrix has met a threshold energy level;
in response to a determination that the energy level of the first matrix has met the threshold energy level, generating a reconstructed signal, wherein the generating the reconstructed signal includes:

determining a direction of arrival phase, wherein the determining the direction of arrival phase includes performing angular phase estimation on a set of sub-matrices of the first matrix,
generating a first set of measurements, wherein the generating the first set of measurements includes beamforming the set of antenna receiver channels to the direction of arrival phase,
based on the first set of measurements, determining an index value associated with a sub-spectrum of the set of sub-spectrums associated with a target object,

determining a Doppler phase based on the index value,
determining a second set of measurements based on the index value, and
based on the second set of measurements, determining a direction of departure phase associated with the target object;

subtracting data associated with the reconstructed signal from the first matrix;
outputting the direction of departure phase, the direction of arrival phase, and the Doppler phase; and
tracking a location of the target object with respect to a vehicle associated with the set of antenna receiver channels based on the direction of departure phase, the direction of arrival phase, and the Doppler phase.

12. The system of claim 11 wherein:

the set of signal segments includes a plurality of signal segments,
the set of antenna receiver channels includes a plurality of antenna receiver channels,
the plurality of signal segments corresponds one-to-one with the plurality of antenna receiver channels,
the set of sub-spectrums is a set of non-overlapping frequency ranges,
the set of sub-spectrums is a set of equal-width frequency ranges, and
each sub-matrix of the set of sub-matrices is a row of the first matrix.

13. The system of claim 11 wherein the instructions include:

transforming the radar signal into a second spectrum;
determining an average of the second spectrum;
determining an average magnitude of the radar signal in each sub-spectrum of the set of sub-spectrums;
determining whether the radar signal indicates that the target object is present in the set of sub-spectrums; and
determining a Doppler phase of the radar signal associated with the target object.

14. The system of claim 11 wherein the instructions include autonomously controlling a vehicle to avoid a collision with the target object.

15. The system of claim 11 wherein the instructions include, after the subtracting the reconstructed signal from the first matrix:

determining whether the energy level associated with the first matrix has met a threshold energy level;
in response to a determination that the energy level of the first matrix has met the threshold energy level, generating a second reconstructed signal, wherein the generating the second reconstructed signal includes:

determining a second direction of arrival phase, wherein the determining of arrival phase includes performing angular phase estimation on a second set of sub-matrices of the first matrix,
generating a third set of measurements, wherein the generating the third set of measurements includes beamforming the set of antenna receiver channels to the second direction of arrival phase,
based on the third set of measurements, determining a second index value associated with a second sub-spectrum of the set of sub-spectrums associated with a second target object,
determining a second Doppler phase based on the second index value,
determining a fourth set of measurements based on the second index value, and
based on the fourth set of measurements, determining a second direction of departure phase associated with the second target object; and

subtracting the second reconstructed signal from the first matrix.

Radar System

112

108

Radar System 108

Antenna Array 136

Transceiver 140

Processor Hardware 144

Memory Hardware 148

Radar Software
152

## FIG. 1

Frequency-Modulated Continuous
Waveform (FMCW) Chirps

frequency

0  1$\omega_c$  2$\omega_c$  3$\omega_c$  4$\omega_c$  5$\omega_c$

• • •

time

## FIG. 2

Doppler Spectrum

Power

Peak at Doppler
frequency

frequency shift
by $\omega_c$

Peak for the
corresponding
channel

$\omega_d$    $\omega_d + \omega_c$

frequency

## FIG. 3

EP 4 653 908 A1

$N$ channels occupy $N$ sectors

$L - N$ empty sectors without signal

Power

$\omega_c^{(0)} = {}^1/_L$

$\cdots$

$\cdots$

$0$

$\omega_d$

$\omega_d + \omega_c^{(0)}$

$\omega_d + (N-1)\omega_c^{(0)}$

$2\pi$

Normalized
Frequency

**FIG. 4A**

$N$ channels occupy $N$ sectors      $L - N$ empty sectors without signal

Power

$\phi_c^{(0)} = {}^{2\pi}/_L$

$0$    $\phi_d$      $\phi_d + \phi_c^{(0)}$        $\phi_d + (N-1)\phi_c^{(0)}$        $2\pi$

Phase

**FIG. 4B**

Signal of TX 1-4 from Target 1 occupies 4 sectors

Signal of TX 1-4 from Target 2 occupies 4 sectors

Power

$\phi_c^{(0)} = {}^{\pi}/_4$

$0$     $\phi_d$     $\phi_d + {}^{\pi}/_4$     $\phi_d + {}^{\pi}/_2$     $\phi_d + {}^{3\pi}/_4$     $\phi_d + \pi$     $\phi_d + {}^{5\pi}/_4$     $\phi_d + {}^{3\pi}/_2$     $\phi_d + {}^{7\pi}/_4$     $2\pi$

Doppler Phase

**FIG. 5**

Power

Signal of TX 1-4 from Target 1 occupies 4 sectors

Signal of TX 1-4 from Target 2 occupies 4 sectors

$\phi_c^{(0)} = \pi/4$

$0$    $\phi_d$    $\phi_d + \pi/4$    $\phi_d + \pi/2$    $\phi_d + 3\pi/4$    $\phi_d + \pi$    $\phi_d + 5\pi/4$    $\phi_d + 3\pi/2$    $\phi_d + 7\pi/4$    $2\pi$

Doppler Phase

**FIG. 6**

Sector 1

$x_1$

RX Channels from
Doppler Sector 1

Sector 2

$x_2$

RX Channels from
Doppler Sector 2

Sector 3

$x_3$

RX Channels from
Doppler Sector 3

Sector 4

$x_4$

RX Channels from
Doppler Sector 4

Sector 5

$x_5$

RX Channels from
Doppler Sector 5

Sector 6

$x_6$

RX Channels from
Doppler Sector 6

Sector 7

$x_7$

RX Channels from
Doppler Sector 7

Sector 8

$x_8$

RX Channels from
Doppler Sector 8

**0** $\pi/4$  Doppler Phase

Non-Coherent
Integration
(NCI) Spectrum

$\phi_0$  Doppler Phase

**FIG. 7**

RX Channels from Doppler Spectrum Sector 1

RX Channels from Doppler Spectrum Sector 2

RX Channels from Doppler Spectrum Sector 3

RX Channels from Doppler Spectrum Sector $L-1$

RX Channels from Doppler Spectrum Sector $L$

$M$ Columns

$L$ Rows

Elements containing TX channels' signals

**FIG. 8**

**FIG. 9**

Sector 1 — $y_1^{(2)}$

Sector 2 — $y_2^{(2)}$

Sector 3 — $y_3^{(2)}$

Sector 4 — $y_4^{(2)}$

Sector 5 — $y_5^{(2)}$

Sector 6 — $y_6^{(2)}$

Sector 7 — $y_7^{(2)}$

Sector 8 — $y_8^{(2)}$

$-\pi$    $-0.3\pi$    $0.2\pi$    $0.6\pi$    $+\pi$

Angular Phase

NCI
Spectrum

$-\pi$    $-0.3\pi$    $0.2\pi$    $0.6\pi$    $+\pi$

Angular Phase

## FIG. 10

29

**FIG. 11**

Start

1204 — Start timer

1208 — Initiate joint Doppler and angle estimation (FIG. 13A)

1212 — Develop map of one or more objects with respect to ego vehicle based on outputted DOA, DOD, Doppler estimate

1216 — Timer elapsed

Y    N

# FIG. 12

Start

A

1304 — Begin transmitting
MIMO radar signal

1308 — Reflected signal
received?

N

Y

1312 — Apply FFT to each RX channel to
determine Doppler spectrum;
perform non-coherent integration
across RX channels; determine
averaged Doppler spectrum

1316 — Divide averaged Doppler spectrum
into *L* sub-spectrums

1320 — Perform non-coherent integration
over the *L* sub-spectrums to
determine the average magnitude of
the sub-spectrums

1324 — Detect Doppler target on averaged
sub-spectrum

B

**FIG. 13A**

B → Determine Doppler phase of the detected Doppler target — 1328

1332 — Form 2-D *L* x *M* matrix containing data from RX channels and sub-spectrums (where *M* is the number of receiving antenna elements)

1336 — Perform angular phase estimation on horizontal dimension of *L* x *M* matrix to determine DOA angular phase

1340 — Beamform the RX array to the estimated DOA (direction of arrival) phase and generate *1* x *L* TX measurement with empty elements

1344 — Identify Doppler target's sector index in Doppler spectrum, de-alias the Doppler phase estimate, extract true *1* x *N* TX measurement (where *N* is the number of transmit antenna elements)

1348 — Perform 1-D DOD (direction of departure) estimation on TX measurement

1352 — For current Doppler target: output Doppler phase estimate, DOA estimate, and DOD estimate

1356 — Update *L* x *M* matrix by subtracting the reconstructed signal of the current target from the current data matrix

1360 — Residue energy (of *L* x *M* matrix) less than threshold?

Y → A

N

**FIG. 13B**

## EUROPEAN SEARCH REPORT

Europäisches
Patentamt
European
Patent Office
Office européen
des brevets

**Application Number**

EP 25 17 5040

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/244370 A1 (ZHANG YU [US] ET AL) 4 August 2022 (2022-08-04) * paragraphs [0002], [0019], [0041] - [0077]; figures 1-6 * | 1-15 | INV. G01S7/35 G01S13/00 G01S13/42 G01S13/87 G01S13/931 |
| A | EP 4 053 586 A1 (APTIV TECH LTD [BB]) 7 September 2022 (2022-09-07) * the whole document * | 1-15 | |
| A | ZHANG TINGTING ET AL: "Transmit Energy Focusing For Parameter Estimation in Transmit Beamspace Slow-Time MIMO Radar", ICASSP 2023 - 2023 IEEE INTERNATIONAL CONFERENCE ON ACOUSTICS, SPEECH AND SIGNAL PROCESSING (ICASSP), IEEE, 4 June 2023 (2023-06-04), pages 1-5, XP034449141, DOI: 10.1109/ICASSP49357.2023.10095517 [retrieved on 2023-05-05] * the whole document * | 1-15 | |
| A | FENG XU ET AL: "Joint DOD and DOA Estimation in Slow-Time MIMO Radar via PARAFAC Decomposition", ARXIV.ORG, CORNELL UNIVERSITY LIBRARY, 201 OLIN LIBRARY CORNELL UNIVERSITY ITHACA, NY 14853, 30 July 2020 (2020-07-30), XP081729946, * the whole document * | 1-15 | TECHNICAL FIELDS SEARCHED (IPC) G01S |

-/--

The present search report has been drawn up for all claims

| Place of search | Date of completion of the search | Examiner |
|---|---|---|
| Munich | 29 September 2025 | Kern, Olivier |

EPO FORM 1503 03.82 (P04C01)

Europäisches
Patentamt

European
Patent Office

Office européen
des brevets

## EUROPEAN SEARCH REPORT

**Application Number**

EP 25 17 5040

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIANG HONG ET AL: "Joint DOD and DOA Estimation for Bistatic MIMO Radar in Unknown Correlated Noise", IEEE TRANSACTIONS ON VEHICULAR TECHNOLOGY, IEEE, USA, vol. 64, no. 11, 1 November 2015 (2015-11-01), pages 5113-5125, XP011589412, ISSN: 0018-9545, DOI: 10.1109/TVT.2014.2384495 [retrieved on 2015-11-10] * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 29 September 2025 | Kern, Olivier |

**EP 4 653 908 A1**

## ANNEX TO THE EUROPEAN SEARCH REPORT
## ON EUROPEAN PATENT APPLICATION NO.

EP 25 17 5040

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2025

| Patent document cited in search report | | Publication date | Patent family member(s) | | Publication date |
|---|---|---|---|---|---|
| US 2022244370 | A1 | 04-08-2022 | CN | 114814805 A | 29-07-2022 |
| | | | EP | 4036600 A1 | 03-08-2022 |
| | | | US | 2022244370 A1 | 04-08-2022 |
| EP 4053586 | A1 | 07-09-2022 | CN | 115015935 A | 06-09-2022 |
| | | | EP | 4053586 A1 | 07-09-2022 |
| | | | US | 2022283300 A1 | 08-09-2022 |

EPO FORM P0459

For more details about this annex : see Official Journal of the European Patent Office, No. 12/82

36

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63650189